(19) Europäisches Patentamt / European Patent Office / Office européen des brevets

(11) **EP 4 667 142 A1**

(12) **DEMANDE DE BREVET EUROPEEN**

(43) Date de publication:
**24.12.2025 Bulletin 2025/52**

(21) Numéro de dépôt: **25305914.1**

(22) Date de dépôt: **17.06.2025**

(51) Classification Internationale des Brevets (IPC):
**B22F 10/28** (2021.01)     **B22F 10/36** (2021.01)
**B22F 10/366** (2021.01)     **B33Y 10/00** (2015.01)
**B33Y 70/00** (2020.01)     **B33Y 80/00** (2015.01)
**C22C 1/04** (2023.01)     **C22C 14/00** (2006.01)

(52) Classification Coopérative des Brevets (CPC):
**C22C 1/0458; B22F 10/28; B22F 10/36;
B22F 10/366; B33Y 10/00; B33Y 70/00;
B33Y 80/00; C22C 14/00**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **17.06.2024 FR 2406434**

(71) Demandeurs:
• **Safran Additive Manufacturing Campus
33185 Le Haillan (FR)**
• **Safran Landing Systems
78140 Vélizy-Villacoublay (FR)**

(72) Inventeurs:
• **ANDRIEU, Sandra Justine
77550 MOISSY-CRAMAYEL (FR)**
• **FERRAGE, Lois
77550 MOISSY-CRAMAYEL (FR)**
• **DELEUZE, Camille
77550 MOISSY-CRAMAYEL (FR)**
• **BILLOT, Thomas
77550 MOISSY-CRAMAYEL (FR)**

(74) Mandataire: **Regimbeau
20, rue de Chazelles
75847 Paris Cedex 17 (FR)**

(54) **PROCÉDÉ DE FABRICATION ADDITIVE D'UNE PIÈCE PAR FUSION D'UN ALLIAGE DE TITANE SUR LIT DE POUDRE, NOTAMMENT POUR APPLICATIONS AÉRONAUTIQUES**

(57) La présente divulgation concerne un procédé de fabrication d'une pièce comprenant un alliage de titane par fusion sélective de couches de poudre métallique au laser, dans lequel l'alliage de titane comprend :

un pourcentage massique d'aluminium supérieur ou égal à 4,7% et inférieur ou égal à 6,0%,

un pourcentage massique de vanadium supérieur ou égal à 6,5% et inférieur ou égal à 8,0%,

un pourcentage massique de silicium supérieur ou égal à 0,15% et inférieur ou égal à 0,6%,

un pourcentage massique de fer inférieur ou égal à 0,3%

un pourcentage massique d'oxygène supérieur ou égal à 0,15% et inférieur ou égal à 0,23%,

le pourcentage massique restant comprenant du titane et éventuellement des impuretés et/ou des additifs,

et dans lequel :

une puissance (P) d'un rayonnement laser du laser appliqué sur la poudre métallique est supérieure ou égale à 306 W et inférieure ou égale à 378 W,

une vitesse de balayage (V) du laser est supérieure ou égale à 1305 mm.s$^{-1}$ et inférieure ou égale à 1420 mm.s$^{-1}$, et

un écart vecteur (h) défini comme étant une distance entre des centres, selon une épaisseur des couches dans le lit de poudre, de deux cordons solidifiés successifs entre deux passages successifs du laser est compris entre 0,080 mm et 0,090 mm

Figure 1

**Description**

**DOMAINE TECHNIQUE**

La présente divulgation porte sur la fabrication additive de pièces par fusion d'une poudre métallique au laser. Elle porte plus spécifiquement sur l'utilisation de tels procédés sur l'alliage de titane Ti575, notamment pour la fabrication de pièces destinées à l'industrie aéronautique.

**ETAT DE LA TECHNIQUE**

Depuis plusieurs années, il est courant d'utiliser des procédés de fabrication additive pour la fabrication de pièces métalliques aéronautiques. De tels procédés sont notamment utilisés pour la fabrication de pièces en titane, ce métal présentant plusieurs avantages qui en font un matériau particulièrement adapté pour les applications aéronautiques, tels qu'une faible masse volumique, une résistance mécanique élevée, une très bonne résistance à la corrosion et une forte compatibilité aux composites à fibres de carbone, un autre matériau couramment utilisé dans l'industrie aéronautique. Par exemple, des alliages de titane servent à fabriquer des pièces de turbomachine d'aéronef situées dans une zone froide de la turbomachine, telles que des disques ou aubes de soufflante, ou encore des aubes de compresseur basse pression. Des alliages de titane peuvent également servir à fabriquer des pièces d'un aéronef qui ne font pas partie du moteur, telles que par exemple des nacelles ou des trains d'atterrissage.

En comparaison avec les procédés de fabrication soustractive, qui consistent à retirer de la matière à un bloc ou une billette de métal, la fabrication additive permet de former des pièces avec une meilleure précision, et certains procédés de fabrication additive permettent ceci sans compromettre les propriétés mécaniques de la pièce.

Un des alliages de titane les plus adaptés pour produire des pièces par fabrication additive à destination de l'industrie aéronautique est le TA6V, qui permet l'obtention de pièces parmi les plus résistantes qu'il est possible de produire par fabrication additive à base de poudre d'un alliage de titane. Le TA6V présente environ les propriétés mécaniques listées dans le tableau 1 ci-dessous :

[Tableau 1]

| | |
|---|---|
| Résistance mécanique (MPa) | 896 MPa |
| Limite conventionnelle d'élasticité $R_{0,2}$ (MPa) | 790 MPa |
| Allongement à la rupture | 10% |

où la limite conventionnelle d'élasticité $R_{0,2}$ est définie comme une valeur de contrainte laissant une déformation plastique résiduelle de sensiblement 0,2% et l'allongement à la rupture est défini au terme d'un essai de traction par l'équation $A = \frac{L_u - L_0}{L_0}$ , où Lu est la longueur du spécimen à sa rupture et $L_0$ est sa longueur avant initiation de l'essai.

Avec l'amélioration des performances moteur, les pièces en alliage de titane susceptibles d'être produites par des procédés de fabrication additive sont de plus en plus fortement sollicitées, de sorte que la résistance mécanique du TA6V devient insatisfaisante au regard des efforts subis par la pièce. En outre, il est nécessaire d'obtenir une augmentation de la résistance de la pièce tout en ne compromettant pas sa ductilité (c'est-à-dire sans diminuer son allongement à la rupture).

EXPOSÉ

Il existe donc un besoin pour un procédé permettant la fabrication de pièces en alliage de titane avec une précision et des propriétés mécaniques adaptées aux exigences de l'industrie aéronautique moderne, notamment des pièces de turbomachine d'aéronef, des nacelles ou des trains d'atterrissage.

À cet effet, il est proposé un procédé de fabrication d'une pièce comprenant un alliage de titane par fusion sélective de couches de poudre métallique au laser, dans lequel l'alliage de titane comprend :

- un pourcentage massique d'aluminium supérieur ou égal à 4,7% et inférieur ou égal à 6,0%,
- un pourcentage massique de vanadium supérieur ou égal à 6,5% et inférieur ou égal à 8,0%,
- un pourcentage massique de silicium supérieur ou égal à 0,15% et inférieur ou égal à 0,6%,
- un pourcentage massique de fer inférieur ou égal à 0,3%
- un pourcentage massique d'oxygène supérieur ou égal à 0,15% et inférieur ou égal à 0,23%,

le pourcentage massique restant comprenant du titane et éventuellement des impuretés et/ou des additifs, et dans lequel :

- une puissance (P) d'un rayonnement laser du laser appliqué sur la poudre métallique est supérieure ou égale à 306 W et inférieure ou égale à 378 W,
- une vitesse de balayage (V) du laser est supérieure ou égale à 1305 mm.s$^{-1}$ et inférieure ou égale à 1420 mm.s$^{-1}$, et
- un écart vecteur (h) défini comme étant une distance entre des centres, selon une épaisseur des couches dans le lit de poudre, de deux cordons solidifiés successifs entre deux passages successifs du laser est compris entre 0,080 mm et 0,090 mm.

L'utilisation d'un alliage de titane tel que défini ci-dessus pour former une pièce par fabrication additive, en combinaison avec la paramétrie spécifiée, permet l'obtention de pièces avec une résistance mécanique et un allongement à rupture accrus par rapport aux pièces de titane qu'il est possible d'obtenir avec les procédés de fabrication additive connus. Ceci est particulièrement avantageux pour produire des pièces fortement chargées à destination de l'industrie aéronautique.

Selon un mode de réalisation, un rapport entre le pourcentage massique d'aluminium et le pourcentage massique de vanadium est compris entre environ 0,65 et 0,8.

Selon un mode de réalisation, la puissance du rayonnement laser est supérieure ou égale à 306 W et inférieure ou égale à 330 W, de préférence supérieure ou égale à 315 W et inférieure ou égale à 325 W, encore plus préférentiellement de sensiblement 320 W. Selon un mode de réalisation, la vitesse de balayage du laser est supérieure ou égale à 1330 mm.s$^{-1}$ et inférieure ou égale à 1390 mm.s$^{-1}$, de préférence supérieure ou égale à 1350 mm.s$^{-1}$ et inférieure ou égale à 1380 mm.s$^{-1}$, encore plus préférentiellement supérieure ou égale à 1370 mm.s$^{-1}$ et inférieure ou égale à 1380 mm.s$^{-1}$, encore plus préférentiellement de sensiblement 1375 mm.s$^{-1}$.

Selon un mode de réalisation, l'écart vecteur entre deux passages successifs du laser est compris entre 0,082 et 0,088 mm, de préférence entre 0,085 mm et 0,087 mm, encore plus préférentiellement de sensiblement 0,086 mm.

Selon un mode de réalisation :

- la puissance du rayonnement laser est supérieure ou égale à 306 W et inférieure ou égale à 330 W,
- la vitesse de balayage du laser est supérieure ou égale à 1330 mm.s$^{-1}$ et inférieure ou égale à 1390 mm.s$^{-1}$, et
- l'écart vecteur entre deux passages successifs du laser est compris entre 0,082 et 0,088 mm.

Selon un mode de réalisation :

- la puissance du rayonnement laser est supérieure ou égale à 315 W et inférieure ou égale à 325 W,
- la vitesse de balayage du laser est supérieure ou égale à 1350 mm.s$^{-1}$ et inférieure ou égale à 1380 mm.s$^{-1}$, et
- l'écart vecteur entre deux passages successifs du laser est compris entre 0,085 mm et 0.087 mm.

Selon un mode de réalisation, la puissance du rayonnement laser, la vitesse de balayage du laser et l'écart vecteur entre deux passages successifs du laser sont choisis de sorte qu'une densité d'énergie volumique soit supérieure ou égale à 44 J.mm$^{-3}$ et inférieure ou égale à 52 J.mm$^{-3}$, de préférence supérieure ou égale à 44 J.mm$^{-3}$ et inférieure ou égale à 48 J.mm$^{-3}$, encore préférentiellement égale à 45 J.mm$^{-3}$.

Selon un mode de réalisation, une épaisseur de chaque couche de poudre est supérieure ou égale à 50 $\mu$m et inférieure ou égale à 70 $\mu$m, de préférence supérieure ou égale à 55 $\mu$m et inférieure ou égale à 65$\mu$m, encore préférentiellement égale à 60 $\mu$m.

La présente divulgation porte en outre sur une pièce mécanique pour un aéronef obtenue au moyen du procédé de fabrication défini ci-dessus, la pièce étant notamment choisie parmi une pièce d'un train d'atterrissage, une pièce d'une turbomachine d'aéronef, une pièce d'une nacelle ou une pièce d'hélicoptère.

## DESCRIPTION DES FIGURES

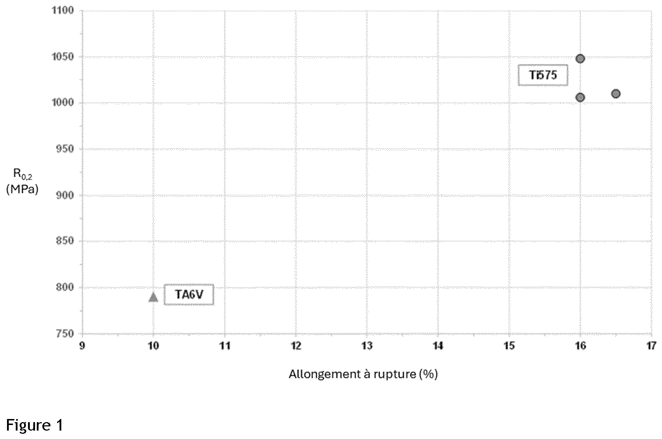

La figure 1 représente des résultats d'essais de traction sur des éprouvettes issues de pièces produites par fabrication additive conventionnelle sur du TA6V ainsi que sur des éprouvettes issues de pièces obtenues par mise en œuvre du procédé proposé.

## DESCRIPTION DÉTAILLÉE DE MODE DE RÉALISATION

Le procédé proposé utilise l'alliage de titane commercialisé sous le nom de « TIMETAL® 575 » ou Ti-575. Le procédé met en œuvre une fusion sélective par laser, qui consiste à chauffer successivement des couches de poudre au moyen d'un rayonnement laser, le métal entrant en fusion à l'endroit où est appliqué le laser. Après un passage du rayonnement laser à une position d'une couche donnée, un « cordon » est formé, correspondant à une zone traitée de cette couche. L'ensemble des cordons solidifiés d'une couche forme ainsi une section, qui constituera une partie de l'épaisseur de la pièce une fois refroidie. Chaque section présente une épaisseur qui dépend de l'épaisseur initiale de la couche dont il est issu, mais qui peut être différente de celle-ci du fait de la fusion et solidification qui permettent la formation de la section.

L'alliage de titane Ti-575 utilisé pour la mise en œuvre du procédé présente les propriétés répertoriées dans le tableau 2 ci-dessous.

[Tableau 2]

| Élément chimique | Pourcentage massique |
|---|---|
| Al | 4,7 - 6,0% |
| V | 6,5 - 8,0% |
| Si | 0,15 - 0,6% |
| Fe | Jusqu'à 0,3% |
| O | 0,15 - 0,23% |

Le pourcentage massique restant est constitué essentiellement de titane, mais peut comprendre des impuretés et/ou des additifs n'affectant pas significativement les propriétés mécaniques de l'alliage.

Selon certains modes de réalisation, le rapport Al/V de l'alliage, défini comme la concentration d'aluminium divisée par la concentration de vanadium en pourcentage massique, est compris entre environ 0,65 et 0,8.

Les inventeurs se sont aperçus que l'utilisation de couches successives d'une poudre de ce métal pour former des pièces par fusion sélective par laser permettait, sous certaines conditions de mise en œuvre de la fabrication additive définies ci-après, l'obtention de pièces présentant des propriétés mécaniques plus avantageuses que celles obtenues pour d'autres alliages de titane, tel que par exemple le TA6V.

Selon le procédé proposé, la puissance P du rayonnement laser appliqué aux couches successives de poudre de Ti-575 est comprise entre 306 et 378 W. La vitesse de balayage du laser V, correspondant à la vitesse à laquelle il se déplace sur la couche de poudre, est comprise entre 1305 et 1420 mm.s$^{-1}$. Enfin, l'écart vecteur h est compris entre 0,080 et 0,090 mm, l'écart vecteur h étant défini comme la distance entre les centres, selon l'épaisseur des couches dans le lit de poudre, de deux cordons solidifiés successifs.

Ces trois paramètres définissent une paramétrie qui permet d'obtenir une pièce de Ti-575 présentant des propriétés mécaniques avantageuses.

Ensemble, ces trois paramètres définissent une densité d'énergie volumique du procédé, en J.mm$^{-3}$, selon la relation :

$$E_V = \frac{P}{V.h.d}$$

où d représente l'épaisseur de couche.

La densité d'énergie volumique $E_v$ du procédé correspond à l'énergie impartie par le laser à un volume de poudre, et est considérée dans le domaine de la fusion sélective par laser comme caractérisant les conditions de mise en œuvre d'un procédé de fusion. En effet, de nombreuses propriétés de la pièce obtenue par ces procédés ont été prouvées comme dépendant directement de la densité d'énergie volumique- on peut nommer, à titre d'exemples, la taille de grain dans la pièce métallique, sa porosité ou la rugosité de sa surface.

De préférence, la paramétrie est choisie telle que définie plus haut pour les trois paramètres considérés, et telle que la densité d'énergie volumique $E_v$ soit sensiblement supérieure ou égale à 44 J.mm$^{-3}$ et sensiblement inférieure ou égale à 52 J.mm$^{-3}$. Préférentiellement, la densité d'énergie volumique $E_v$ est sensiblement supérieure ou égale à 44 J.mm$^{-3}$ et sensiblement inférieure ou égale à 48 J.mm$^{-3}$. Encore préférentiellement, la densité d'énergie volumique Ev est de sensiblement 45 J.mm$^{-3}$.

En comparaison avec des pièces obtenues au moyen de procédés de fusion sélective par laser sur poudre de TA6V conventionnels, ainsi qu'au moyen d'un procédé de fusion sélective par laser sur poudre de Ti-575 en dehors de la paramétrie proposée, les pièces obtenues par fusion d'une poudre de Ti-575 selon plusieurs exemples correspondant à cette paramétrie sont de meilleure qualité. Ceci correspond premièrement à une amélioration des propriétés mécaniques des pièces, les pièces produites par le procédé proposé présentant :

- Une résistance mécanique supérieure à 1 050 MPa,
- Une limite conventionnelle d'élasticité de $R_{0,2} > 1\ 000$ MPa,
- Un allongement à rupture supérieur à 12%, et donc une ductilité supérieure à celle des pièces obtenues par fusion de TA6V.

En comparaison avec les valeurs obtenues pour des pièces équivalentes obtenues par fabrication additive à partir de poudre de TA6V, répertoriées dans le Tableau 1, les propriétés mécaniques des pièces obtenues par le procédé proposé sont donc supérieures.

Ces propriétés sont obtenues ultérieurement à des étapes de traitement thermique qui suivent la fabrication additive. Les étapes de traitement thermique peuvent comprendre une mise en solution de la pièce suivie d'un vieillissement de la pièce, dans des conditions de mise en œuvre conventionnelles pour l'homme du métier sur des pièces de titane obtenues par fabrication additive. Par exemple, les étapes de traitement thermique peuvent comprendre successivement :

- une mise en solution réalisée à 910° C pendant une heure,
- un refroidissement par air pulsé,
- un traitement à 500° C pendant huit heures, et
- un refroidissement à l'air libre.

L'amélioration de la qualité des pièces obtenues, grâce au procédé proposé, est également démontrée par les quantités suivantes :

- une réduction des indications linéaires et des indications sphériques, ces indications correspondant à des défauts mis en évidence dans la pièce,
- une réduction du taux de porosité dans la pièce, correspondant à un rapport entre un volume total de pores présents dans la pièce et un volume global de la pièce.

Les indications sont des signaux détectés par des moyens de contrôle non destructifs et/ou par micrographie, relatifs à des anomalies (par exemple, des criques, un manque de fusion, des oxydes, des porosités, des inclusions, des piqûres, etc).

Les indications sphériques sont des indications qui apparaissent, en contrôle, avec des formes arrondies (c'est-à-dire sans angles vifs) et dont un rapport longueur/largeur est inférieur ou égal à 2.

Les indications linéaires (ou non-sphériques) correspondent à toutes indications ne pouvant pas être considérées comme des indications sphériques telles que définies au paragraphe précédent.

Ces propriétés pour plusieurs exemples de pièces, obtenues par fabrication additive à partir de poudre de Ti-575 (exemples n° 1 à 4) sont répertoriées dans le Tableau 3.

[Tableau 3]

|  | Exemple n° 1 | Exemple n° 2 | Exemple n° 3 | Exemple n° 4 |
|---|---|---|---|---|
| Puissance P du laser (W) | 270 | 298 | 318 | 378 |
| Vitesse de balayage V (mm.s⁻¹) | 1475 | 1505 | 1375 | 1405 |
| Écart vecteurs h (mm) | 0,088 | 0,094 | 0,086 | 0,088 |
| Densité d'énergie volumique $E_d$ (J.mm⁻³) | 31,7 | 37,6 | 44,6 | 50,8 |
| Indication sphérique maximale ($\mu$m) | 148 | 83 | 92 | 90 |
| Indication linéaire maximale ($\mu$m) | 645 | 137 | 64 | 57 |
| Taux de porosité (%) | 1,578 | 0,769 | 0,234 | 0,321 |

Les pièces conformes aux exemples 3 et 4, c'est-à-dire pour lesquelles la puissance du laser, la vitesse de balayage et l'écart vecteur lors de la fabrication par fusion sélective est dans les gammes prescrites, respectivement, de 306 - 378 W, 1305 - 1420 mm.s⁻¹ et 0,080 - 0,090 mm, ont à la fois une porosité inférieure et des indications sphériques maximales inférieures aux pièces réalisées par des procédés dont les paramètres sont en dehors de ces gammes, tels qu'illustrés par les exemples 1 et 2.

Une faible porosité est souhaitable car elle augmente la résistance mécanique de la pièce, sa limite conventionnelle d'élasticité $R_{0,2}$ ainsi que son allongement à la rupture.

De faibles indications sphériques sont également souhaitables, car elles traduisent une meilleure qualité de la pièce produite, et donc de meilleures propriétés mécaniques.

Selon un mode de réalisation, la puissance du rayonnement laser P est comprise entre 306 et 330 W, préférentiellement d'environ 318 W, encore plus préférentiellement entre 315 et 325 W, encore plus préférentiellement de sensiblement 320 W.

Selon un mode de réalisation, la vitesse de balayage du laser V est comprise entre 1330 et 1390 mm.s$^{-1}$, préférentiellement entre 1350 mm.s$^{-1}$ et 1380 mm.s$^{-1}$, encore plus préférentiellement entre 1370 mm.s$^{-1}$ et 1380 mm.s$^{-1}$, encore plus préférentiellement d'environ 1375 mm.s$^{-1}$.

Selon un mode de réalisation, l'écart vecteur h est compris entre 0,082 et 0,088, préférentiellement entre 0,085 mm et 0,087 mm, encore plus préférentiellement d'environ 0,086 mm.

Selon un mode de réalisation :

- la puissance du rayonnement laser est supérieure ou égale à 306 W et inférieure ou égale à 330 W,
- la vitesse de balayage du laser est supérieure ou égale à 1330 mm.s$^{-1}$ et inférieure ou égale à 1390 mm.s$^{-1}$, et
- l'écart vecteur entre deux passages successifs du laser est compris entre 0,082 et 0,088 mm.

Selon un mode de réalisation :

- la puissance du rayonnement laser est supérieure ou égale à 315 W et inférieure ou égale à 325 W,
- la vitesse de balayage du laser est supérieure ou égale à 1350 mm.s$^{-1}$ et inférieure ou égale à 1380 mm.s$^{-1}$, et
- l'écart vecteur entre deux passages successifs du laser est compris entre 0,085 mm et 0.087 mm.

Ces valeurs préférentielles permettent l'obtention de pièces avec un taux de porosité particulièrement faible : en effet, l'exemple n° 3 du Tableau 1, pour lequel les paramètres sont dans ces gammes de valeur préférentielles, et pour lequel l'écart vecteur est notamment de 0,086 mm, permet un taux de porosité plus faible que l'exemple n° 4, pour lequel les valeurs des paramètres sont inclus dans les gammes :

- $306 \ W \leq P \leq 378 \ W$,
- $1305 \ mm.s^{-1} \leq V \leq 1420 \ mm.s^{-1}$, et
- $0{,}080 \leq h \leq 0{,}090$

mais ne sont pas inclus dans les gammes préférentielles.

Une fusion sélective mise en œuvre dans ces plages plus restreintes correspond, de manière inattendue, à une densité d'énergie volumique différente de celle utilisée pour les procédés conventionnels de fabrication additive sur une poudre de TA6V. En effet, la densité d'énergie volumique pour ces plages plus restreinte est entre environ 44 et 52 J.mm$^{-3}$, et est donc plus élevée que celle des procédés de fusion sélective de TA6V conventionnels (32 à 43 J.mm$^{-3}$ environ).

La figure 1 représente la limite conventionnelle d'élasticité $R_{0,2}$ (en MPa) et l'allongement à rupture (en %) obtenus durant des essais de traction sur éprouvettes pour une pièce de Ta6V obtenue par un procédé de fabrication additive conventionnelle, ainsi que pour deux pièces de Ti-575 obtenues par mise en œuvre du procédé proposé. Ces essais de traction ont été réalisés selon les normes d'essai ASTM E8 (équivalent européen EN 2002-001). Les éprouvettes utilisées ont une longueur de 53 mm, un diamètre de zone utile de 4 mm et un diamètre de tête de 9 mm.

**Revendications**

1. Procédé de fabrication d'une pièce comprenant un alliage de titane par fusion sélective de couches de poudre métallique au laser, dans lequel l'alliage de titane comprend :

   un pourcentage massique d'aluminium supérieur ou égal à 4,7% et inférieur ou égal à 6,0%,
   un pourcentage massique de vanadium supérieur ou égal à 6,5% et inférieur ou égal à 8,0%,
   un pourcentage massique de silicium supérieur ou égal à 0,15% et inférieur ou égal à 0,6%,
   un pourcentage massique de fer inférieur ou égal à 0,3%
   un pourcentage massique d'oxygène supérieur ou égal à 0,15% et inférieur ou égal à 0,23%,
   le pourcentage massique restant comprenant du titane et éventuellement des
   impuretés et/ou des additifs,

   et dans lequel :

une puissance (P) d'un rayonnement laser du laser appliqué sur la poudre métallique est supérieure ou égale à 306 W et inférieure ou égale à 378 W,
une vitesse de balayage (V) du laser est supérieure ou égale à 1305 mm.s$^{-1}$ et inférieure ou égale à 1420 mm.s$^{-1}$, et
un écart vecteur (h) défini comme étant une distance entre des centres, selon une épaisseur des couches dans le lit de poudre, de deux cordons solidifiés successifs entre deux passages successifs du laser est compris entre 0,080 mm et 0,090 mm.

2. Procédé selon la revendication 1, dans lequel un rapport entre le pourcentage massique d'aluminium et le pourcentage massique de vanadium est compris entre environ 0,65 et 0,8.

3. Procédé selon l'une quelconque des revendications 1 et 2, dans lequel la puissance du rayonnement laser (P) est supérieure ou égale à 306 W et inférieure ou égale à 330 W.

4. Procédé selon l'une quelconque des revendications 1 à 3, dans lequel la vitesse de balayage du laser (V) est supérieure ou égale à 1330 mm.s$^{-1}$ et inférieure ou égale à 1390 mm.s$^{-1}$.

5. Procédé selon l'une quelconque des revendications 1 à 4, dans lequel l'écart vecteur (h) entre deux passages successifs du laser est compris entre 0,082 et 0,088 mm.

6. Procédé selon l'une quelconque des revendications 1 à 5, dans lequel la puissance (P) du rayonnement laser, la vitesse (V) de balayage du laser et l'écart vecteur (h) entre deux passages successifs du laser sont choisis de sorte qu'une densité d'énergie volumique ($E_v$) soit supérieure ou égale à 44 J.mm$^{-3}$ et inférieure ou égale à 52 J.mm$^{-3}$, de préférence supérieure ou égale à 44 J.mm$^{-3}$ et inférieure ou égale à 48 J.mm$^{-3}$, encore préférentiellement égale à 45 J.mm$^{-3}$.

7. Procédé selon l'une quelconque des revendications 1 à 6, dans lequel une épaisseur de chaque couche de poudre est supérieure ou égale à 50 $\mu$m et inférieure ou égale à 70 $\mu$m, de préférence supérieure ou égale à 55 $\mu$m et inférieure ou égale à 65$\mu$m, encore préférentiellement égale à 60 $\mu$m.

8. Procédé selon l'une quelconque des revendications précédentes, dans lequel :

   - la puissance du rayonnement laser est supérieure ou égale à 315 W et inférieure ou égale à 325 W,
   - la vitesse de balayage du laser est supérieure ou égale à 1350 mm.s$^{-1}$ et inférieure ou égale à 1380 mm.s$^{-1}$, et

   l'écart vecteur entre deux passages successifs du laser est compris entre 0,085 mm et 0.087 mm.

9. Pièce mécanique pour un aéronef obtenue au moyen du procédé selon l'une quelconque des revendications 1 à 8, la pièce étant notamment choisie parmi une pièce d'un train d'atterrissage, une pièce d'une turbomachine d'aéronef, une pièce d'une nacelle ou une pièce d'hélicoptère.

Figure 1

Europäisches
Patentamt

European
Patent Office

Office européen
des brevets

## RAPPORT DE RECHERCHE EUROPEENNE

Numéro de la demande

EP 25 30 5914

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WILLIAMS JAMES C. ET AL: "Opportunities and Issues in the Application of Titanium Alloys for Aerospace Components", METALS , vol. 10, no. 6 27 mai 2020 (2020-05-27), page 705, XP093116120, CH ISSN: 2075-4701, DOI: 10.3390/met10060705 Extrait de l'Internet: URL:https://www.mdpi.com/2075-4701/10/6/705/pdf [extrait le 2025-01-17] * 4.3 Additive manufacturing (AM) of Ti Alloys; page 9 * * 5. New Alloy Developments; page 19 * ----- | 1-9 | INV. B22F10/28 B22F10/36 B22F10/366 B33Y10/00 B33Y70/00 B33Y80/00 C22C1/04 C22C14/00 |
| Y | XU YANGLI ET AL: "Microstructural tailoring of As-Selective Laser Melted Ti6Al4V alloy for high mechanical properties", JOURNAL OF ALLOYS AND COMPOUNDS, ELSEVIER SEQUOIA, LAUSANNE, CH, vol. 816, 1 octobre 2019 (2019-10-01), XP085966765, ISSN: 0925-8388, DOI: 10.1016/J.JALLCOM.2019.152536 [extrait le 2019-10-01] * 2. Experimental details; page 2 * * specimen S6; tableau 1 * ----- -/-- | 1-9 | **DOMAINES TECHNIQUES RECHERCHES (IPC)** B22F C22C B33Y |

Le présent rapport a été établi pour toutes les revendications

| Lieu de la recherche | Date d'achèvement de la recherche | Examinateur |
|---|---|---|
| La Haye | 10 juillet 2025 | Forestier, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

page 1 de 2

**EP 4 667 142 A1**

Europäisches
Patentamt

European
Patent Office

Office européen
des brevets

## RAPPORT DE RECHERCHE EUROPEENNE

**Numéro de la demande**

EP 25 30 5914

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CEPEDA-JIM?NEZ C.M. ET AL: "Effect of energy density on the microstructure and texture evolution of Ti-6Al-4V manufactured by laser powder bed fusion", MATERIALS CHARACTERIZATION., vol. 163, 1 mai 2020 (2020-05-01), page 110238, XP093237091, US ISSN: 1044-5803, DOI: 10.1016/j.matchar.2020.110238 * le document en entier * ----- | 1-9 | |
| A | EP 4 327 964 A1 (ROLLS ROYCE PLC [GB]) 28 février 2024 (2024-02-28) * le document en entier * ----- | 1-8 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 10 juillet 2025 | Forestier, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 25 30 5914

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-07-2025

| Document brevet cité<br>au rapport de recherche | | Date de<br>publication | Membre(s) de la<br>famille de brevet(s) | | Date de<br>publication |
|---|---|---|---|---|---|
| EP  4327964 | A1 | 28-02-2024 | CN | 117660804 A | 08-03-2024 |
| | | | EP | 4327964 A1 | 28-02-2024 |
| | | | US | 2024068074 A1 | 29-02-2024 |

EPO FORM P0460

Pour tout renseignement concernant cette annexe : voir Journal Officiel de l'Office européen des brevets, No.12/82